# EUROPEAN PATENT APPLICATION

(11) **EP 2 154 026 A1**
(43) Date of publication of application: **17.02.2010**
(21) Application number: 08161564.3
(22) Date of filing: 31.07.2008
(51) Int. Cl.: B60Q 1/50, B60Q 1/52, B60Q 1/26

(54) **Alarm system for maintaining safe distance between motor vehicles**

(71) Applicant: Rachamim, Levi, 61297 Tel Aviv (IL)
(72) Inventor: Rachamim, Levi, 61297 Tel Aviv (IL)
(74) Representative: Modiano, Micaela Nadia

(57) **Abstract**

The systems, subject of this invention, are designed to warn drivers in any case of failure to maintain a safe distance between motor vehicles. The systems include sensors (8), which are located in the front and rear parts of the vehicle (1), that measure the distance between the vehicle and the vehicle directly ahead (9) and directly behind (3). The system also includes a device (4) that gauges the speed of the vehicle and a control unit that includes a processor (5) and software that computes the relative speed of the vehicle and the distances between it and the vehicles directly ahead and/or behind and issues a warning whenever the stopping distance is unsafe.

## Description

### TECHNICAL FIELD

The systems, subject of the present invention, pertain to the field of motor vehicles.

### BACKGROUND ART

In many cases, drivers do not maintain a sufficient safety distance from the vehicle ahead of them, and are usually unaware of this fact. The first two systems, subject of the present invention, are designed to warn drivers in any case of failure to maintain a safe distance. The third system, subject of the present invention, is designed to alert drivers in any case that a motorcycle or motorbike driver brakes his or her vehicle.

### THE INVENTION

**(The numbers indicated in parentheses after each term refer to its corresponding marking in the drawings)**

The system, subject of the present invention, is intended to provide real-time warning to drivers in cases of failure to maintain a safe distance between vehicles when driving. The system, subject of the present invention, comprises three separate systems.

### System No. 1:

The system is designed to issue a warning in case of failure to maintain a safe distance. The system is installed in the vehicle (1) and includes one or more sensors (2) or any other measuring device that is designed to measure, either continuously or at very short intervals, the distance between the vehicle (1) and the vehicle behind (3), when both vehicles are in motion; a device (4) that continuously provides the speed of the vehicle (1); a control unit containing a CPU (5) that receives continuous data pertaining to the speed of the vehicle (1) from the device that provides the speed data (4) and data pertaining to the distance between the vehicle (1) and the vehicle behind (9), which are collected by the sensor (2); an illumination panel (6) that can be attached to the rear window of the vehicle (1). The illumination panel (6) can either be equipped with an independent power source (i.e. battery) or wired to the battery of the vehicle (1).

The processor in the control unit (5) includes software that calculates the distance required for a safe stop by the vehicle behind (3) according to the speed of the vehicles and the distance between them. When the control unit detects that the distance is less than the preset safe distance, a signal is transmitted from the control unit (5) to the receiver, located adjacent to the illumination panel (6). The illumination panel is activated so that the driver in the vehicle behind (3) sees an illumination panel light up in the rear window of the vehicle (1) ahead, which is designed as a warning light, and may include the words "Keep a safe distance". In such a case, the driver in the vehicle behind (3) will realize that he or she is not maintaining a safe distance from the vehicle ahead (1), leading him or her to slow down and maintain a safe distance from the vehicle ahead.

The system can also include a transmitter (7), adjacent to the control unit (5), that will transmit a signal to the receiver located next to the illumination panel (6). The signal to the illumination panel can, of course, be relayed also by means of a wire connection.

For a more effective installation of the system, it is recommended that the communications between the control unit (5) and the illumination panel (6) be wireless so that the signal that activates or shuts off the illumination panel (6) is transmitted to the receiver attached to the illumination panel (6) from the control unit by means of the attached transmitter (7).

For a more effective application of the invention, it is recommended that the illumination panel (6) be designed as a warning signal, preferably in red, yellow or orange, possibly displaying a written message such as "Keep a safe distance".

The objective of System No.1 is to warn drivers in case they fail to maintain a safe distance according to law. Drivers often do not maintain a safe distance from the vehicle ahead, simply due to lack of awareness. The above-described system issues a real-time warning whenever the driver fails to maintain a safe distance and draws his or her attention to the situation.

### System No. 2:

The system is designed to issue a warning in case of failure to maintain a safe distance. The system is installed in the vehicle (1) and includes one or more sensors (8) or any other measuring device that is designed to measure, either continuously or at very short intervals, the distance between the vehicle (1) and the vehicle ahead (9) when both vehicles are in motion; a device (4) that continuously provides the speed of the vehicle (1); a control unit containing a CPU (5) that receives continuous data pertaining to the speed of the vehicle (1) from the device that provides the speed data (4) and data pertaining to the distance between the vehicle (1) and the vehicle traveling ahead (9), which are collected by the sensor (8); an indicator light or any other warning device (10) that can be attached to the indicator panel of the vehicle (1). The indicator light (10) can either be equipped with an independent power source (i.e. battery) or wired to the battery of the vehicle (1).

The processor in the control unit (5) includes software that calculates the distance required for a safe stop by the vehicle (1) according to the speed of the vehicles and the distance between them. When the control unit detects that the distance is less than the preset safe distance, a signal is transmitted from the control unit (5) to the indicator light (10), activating it so that the driver in the vehicle (1) realizes that he or she is not maintaining a safe distance from the vehicle ahead (9).

The system can also include a transmitter (7), located next to the control unit (5), that will relay a signal to the indicator light (10). An acoustic warning device or other warning device can be used as an alternative to the indicator light.

For a more effective installation of the system, it is recommended that the communication between the control unit (5) and the indicator light (10) be wireless so that the signal that activates or shuts off the indicator light (10) is transmitted to the receiver attached to the indicator light (10) from the control unit by means of the attached transmitter (7). The signal can, of course, be relayed to the indicator light also by means of a wire connection

The objective of System No. 2 is to warn the driver in case he or she fails to maintain a safe distance from the vehicle ahead. Drivers often do not maintain a safe distance from the vehicle ahead, simply due to lack of awareness. The above-described system issues a real-time warning on the driver's failure to maintain a safe distance and draws his or her attention to the situation.

### Systems No. 1 and 2:

The illumination panel (6) can also include an indicator or lamp that illuminates when the vehicle's turn signals are on. The illumination panel can include two indicators or lamps that, in fact, parallel the operation of the vehicle's regular turn signal lights, so that the right- or left-hand indicator on the illumination panel lights up when signalling a right- or left-hand turn, respectively. The illumination panel (6) can be attached to the vehicle's rear window or to any other prominent location. The device (4) that provides the vehicle's speed data will include means to receive data on the operation of the vehicle's turn signal lights. The connection of the illumination panel (6) to the system (1) can be either wireless or wired (including connection to the vehicle's regular source of power). The system will include an option whereby a warning indicator installed near the driver illuminates in case of failure to maintain safe distance (from vehicle in back or in front - Systems 1 and 2, respectively).

### Systems No. 1 and 2:

The illumination panel (6) will also include indicator lights that will parallel the vehicle's turn signal lights, and the connection can be either wired or wireless.

The illumination panel (6) will also include indicator lights that will parallel the vehicle's brake lights, and the connection will be wireless.

Systems 2-3 will include a sensor that will detect the operation of the vehicle's turn signal lights and will transmit a signal to the parallel indicator lights on the illumination panel. The indicator lights will be lit as long as the vehicle's turn signal lights are on.

Systems 2-3 will include a sensor that will detect the operation of the vehicle's brake lights and will transmit a signal to the parallel indicator lights on the illumination panel. The indicator lights will be lit as long as the vehicle's brake lights are on.

The systems will include an option whereby if a safe distance is not maintained between the vehicles, a text display will appear on the illumination panel, indicating failure to maintain a safe distance. This text display will illuminate also on an illumination panel installed near the driver.

Systems Nos. 2 and 3 can also be used on two-wheeled vehicles, such as motorcycles and motorbikes.

### System No. 3:

The system is designed to issue a warning when a two-wheeled vehicle breaks or intend to turn, such as a motorcycle or motorbike.

The system is designed to be installed on two-wheeled motor vehicles, such as motorcycles and motorbikes, and includes a device (11) that detects the application of pressure on the motorcycle/motorbike's brake pedal or the Vinker lights; a control unit including a CPU (12) that receives the information that the brakes or the Vinker lights have been engaged; and an illumination panel (13) that can be attached to the driver's helmet or his or her clothes. The illumination panel (13) includes an independent power source (i.e. a battery) and a receiver designed to receive the signal from the control unit (12). The system also includes a transmitter (14), attached to the control unit, that transmits the signal to the receiver located on the illumination panel (13). The signal can, of course, be relayed to the illumination panel also by means of a wire connection.

When the driver of the motorcycle or motorbike steps on the brakes or turn-on the Vinker lights, the processor in the control unit (12) transmits a signal to the receiver on the illumination panel (13), thereby activating the illumination panel attached to the back of the driver's helmet or to any other conspicuous place, thus warning the drivers in vehicles behind him or her that the motorcycle or motorbike ahead is decelerating or intends to turn. The moment the motorcycle or motorbike driver releases pressure from the brake pedal or turn-of the Vinker lights, the signal stops and the illumination panel (10) goes off.

The objective of System No. 3 is to enable drivers on the road to clearly recognize when a motorcycle or motorbike driver is braking or intend to turn. The problem is that, at present, braking lights and Vinker lights on motorcycles and motorbikes are located relatively low and are inconspicuous, whereas the illumination panel (13) of the system, which is attached to the back of the motorcycle or motorbike driver's helmet, is very conspicuous.

The illumination panel (13) can be permanently fixed or an integral part of the helmet itself. The illumination panel (13) can include an indicator or lamp that illuminates when the turn signals are on. The illumination panel can include two indicators or lamps that, in fact, parallel the operation of the motorcycle or motorbike's regular turn signal lights, so that the right- or left-hand indicator on the illumination panel lights up when signalling a right- or left-hand turn, respectively. The control unit (12) will include a device that provides data on the operation of the motorcycle or motorbike's turn signal lights. Alternatively, the illumination panel (13) can be separate and be attached to the helmet or the motorcycle or motorbike's delivery box, or to the clothes of the driver or passenger riding behind the driver, or to any other location. The connection between the illumination panel (13) and the system can be either wireless or wired (including connection to the vehicle's regular source of power). The illumination panel (13) will illuminate also when the motorcycles or motorbike's horn blows. The control unit (12) will include a device that provides data on the blowing of the motorcycle or motorbike's horn.

The illumination panel (13) can be fixed or an integral part of the helmet itself and will include indicator lights that parallel the motorcycle's or motorbike's turn signal lights.

The system's electrical connection can be directly to the vehicle's electrical system or battery by means of two clips (so-called "bananas") or a fast connection socket/plug, which will be built-in in the vehicle.

The system will enable to connect the battery on the helmet with the motorbike's battery, including a charging option.

The system will include a receive, on the helmet, that will receive a signal when the motorbike's turn signal lights are on and will activate the parallel indicator lights on the helmet's illumination panel.

The system will include a sensor that will detect the activation of brake lights by the vehicle traveling in front of the motorbike and will activate the brake indicator lights on the helmet's illumination panel.

It is hereby clarified that the system's illumination panel can be affixed to the helmet, to the clothes of the driver or the passenger seated behind the driver, the delivery box or any other part of the motorbike.

The system can be used also on other kinds of vehicles, including bicycles, motorcycles and any other two-wheeled vehicle as well as on vehicles with more than two wheels.

### System No. 4:

The system is designed to issue a warning whenever the bicycle (two-wheeled non-motor vehicle) decelerates, brakes or makes a turn (right or left).

The system is designed for installation on a bicycle and it includes: (a) Sensor or mechanical device that senses application of the bicycle's brake; (b) command unit that includes a CPU to which information on such activation of brake is transmitted; (c) device that identifies activation of bicycle's right- or left-hand turn indicators; (d) illumination panel that can be attached to the bicycle rider's helmet or clothes or to any other place on the bicycle or on a pole attached to the bicycle.

The illumination panel can include a receiver designed to receive the signal from the command unit. The illumination panel can include an independent power source (battery, for instance) or a cable connection to a dynamo installed on the bicycle. The system includes a transmitter that is attached to the command unit and serves to transmit the signal to the receiver located on the illumination panel. The signal can obviously be transmitted also via cable connection to the illustrated panel. Instead of a command unit, the system may include a cable connection for transmission of the information by connecting and disconnecting an electrical current.

When the bicycle rider applies the brakes, the processor in the command unit transmits a signal to the receiver located on the illumination panel. The receiver activates the illumination panel, which is attached to the back side of the rider's helmet or to any other visible location (for instance, the rider's clothes). The purpose of this is to warn drivers in vehicles behind the bicycle of deceleration or braking of the bicycle in front of them. When the bicycle rider stops applying the brakes, transmission of the signal stops and the illumination panel turns off. The signal indicating the application of the brake can be based on a microswitch that connects or disconnects an electric current, so that a computer unit is not required. When making a right- or left-hand turn, a signal is transmitted to the illumination panel so as to turn the turn indicator light on or off. The signal can be based on one or two switches, which are each located near one of the bicycle's handles, such that the rider can flip the switch (to the left or right, according to need) whenever he or she makes a right- or left-hand turn. The switch can be a pushbutton that turns the indicator lights on when pressed and turns them off when pressed again. Each of the two pushbuttons is located on one side of the handlebars according to the direction of the turn. The signal indicating a right- or left-hand turn can be automatic in that the system includes a component, which is installed on the bicycle's handlebars, that identifies any angle other than 90° relative to the bicycle's handlebars and interprets it as a right- or left-hand turn, according to the said angle. An additional or alternative option is a unit that recognizes if the bicycle itself is leaning at an angle relative to the road, and interprets that as a right- or left-hand turn (according to the direction in which the bicycle is leaning). The signal indicating that the handlebars are leaning or turning or that the rider has pressed the switch can be transmitted either by cable to the illumination panel or in a wireless manner from the command unit via transmitter to the receiver installed on the illumination panel. Obviously, when the leaning or application of the brake or change in handlebar angle stops, transmission of the signal will stop and the illumination panel (indication light) will turn off. The system identifies application of the brakes via the sensor or mechanical component (microswitch) that identifies movement of the brake pads or brake cable, and sends a signal to the command unit or directly (by cable) to the illumination panel. When application of brakes stops, transmission of the signal stops and the brake light on the illumination panel turns off.

The objective of System 4 is to enable drivers of vehicles to clearly identify any deceleration or braking or turning, both right and left, by the bicycle rider. The problem today is that bicycles usually have no brake or turn indication lights and when such lights exist, they are located relatively low and in an inconspicuous place, whereas the system's illumination panel is attached to the back side of the bicycle rider's helmet or clothes or to a conspicuous pole.

The illumination panel can be a fixed or integral part of the helmet itself or, alternatively, it can be separate and attached to the rider's helmet or clothes or to any other part of the bicycle.

The systems, subject of the invention, includes a sensor that can either be built into the motorcycle or attached to it. The sensor detects the activation of the turn indicator and brake lights and accordingly transmits a signal to the illumination mechanism (100) that is attached to the helmet (300). The system may include several sensors intended to detect the separate activation of the vehicle's turn indicator lights and brake lights. The sensor may be light-based or heat-based or may operate according to any other principle that enables to detect activation of the relevant light. The advantage of a system that is equipped with a sensor as described is, among other things, in that there is no need to involve and/or connect to any of the motorcycle's existing systems. The sensor can be affixed or attached to the plastic that covers the said lights using a sticker or any other means. Another option for the implementation of the invention is using a sensor that is located on the illumination panel (100), which detects the activation or deactivation of the turn indicator and brake lights and, accordingly, sends an activation command to the illumination lights on the illumination panel. Thus, there is no need to involve the motorcycle or any of its parts. The signal may be transmitted on a variety of frequencies. The system may include one or more sensors. It is possible to use a sensor located on the illumination panel, which detects the activation and deactivation of the vehicle's turn indicator and brake lights. This sensor may function by filtering the constant background light (such as sunlight, street lights, and so on).

**Anti-theft system:** A portable sensor that is attached to a helmet or to any other object (clothing, handbag, keychain, and so on), and which communicates directly with a permanent sensor located in the vehicle or on the motorcycle. When the distance between the portable sensor (i.e. the driver him or herself) and the permanent sensor (i.e. the vehicle or motorcycle) exceeds a predetermined distance (for instance, 5 meters), ignition of the vehicle is prevented.

### DESCRIPTION OF THE DRAWINGS

The following drawings are not intended to limit the scope of the invention or its method of application. The drawings are intended only to illustrate the invention and present only one of many possible applications.

### Drawing Nos. 1 and 2:

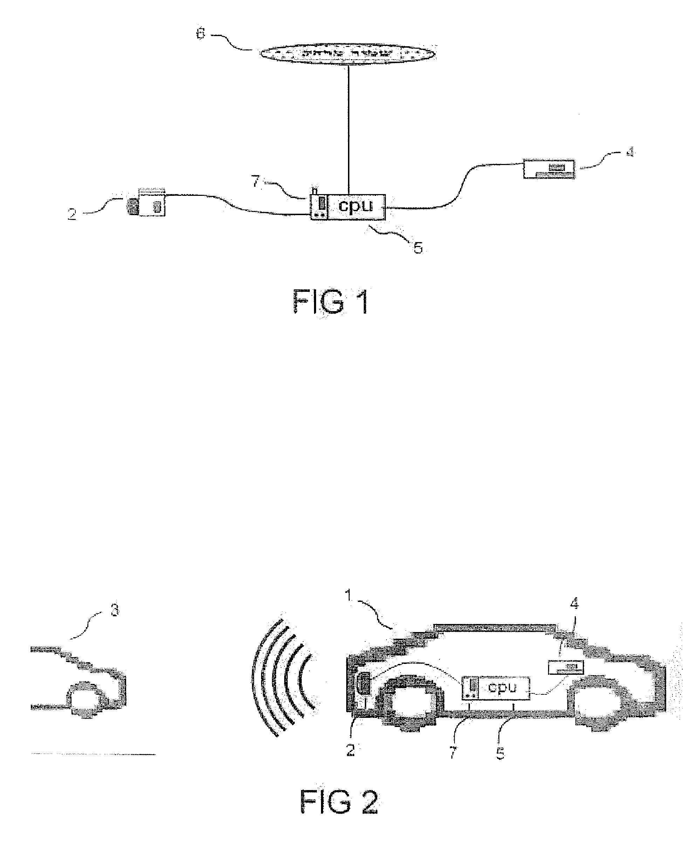

Drawings Nos. 1 and 2 illustrate System No. 1, which includes the vehicle (1) in which the system is installed; one or more sensors (2) in the rear part of the vehicle; a device (4) for gauging the vehicle's speed data; the control unit (5); the illumination panel (6); and a transmitter (7) that is located near the control unit.

### Drawings Nos. 3 and 4:

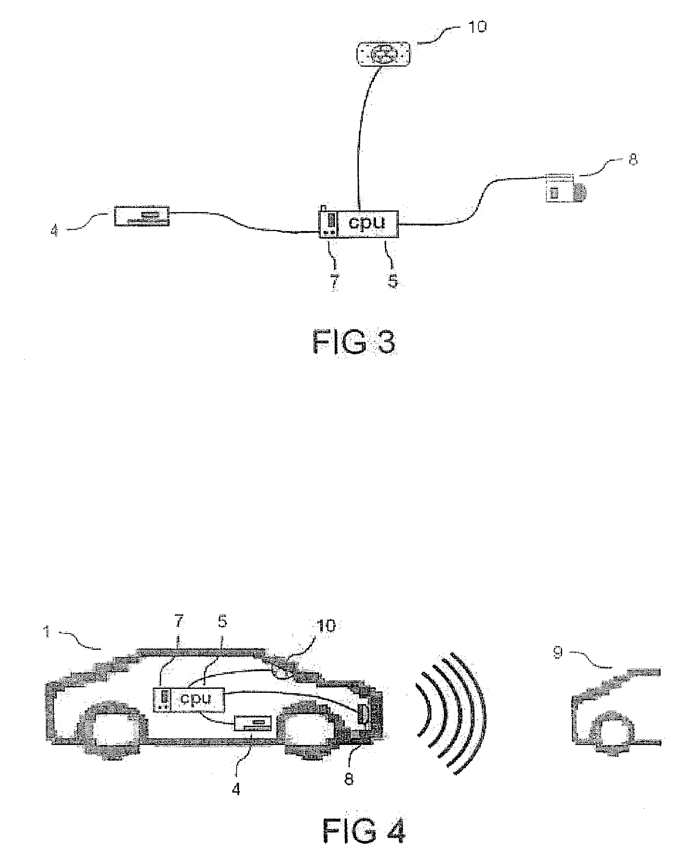

Drawings Nos. 3 and 4 illustrate System No. 2, which includes the vehicle (1) in which the system is installed; one or more sensors (8) in the front part of the vehicle; a device (4) for gauging the vehicle's speed data; the control unit (5); an indicator light (10); and a transmitter (7) that is located near the control unit.

### Drawing No. 5:

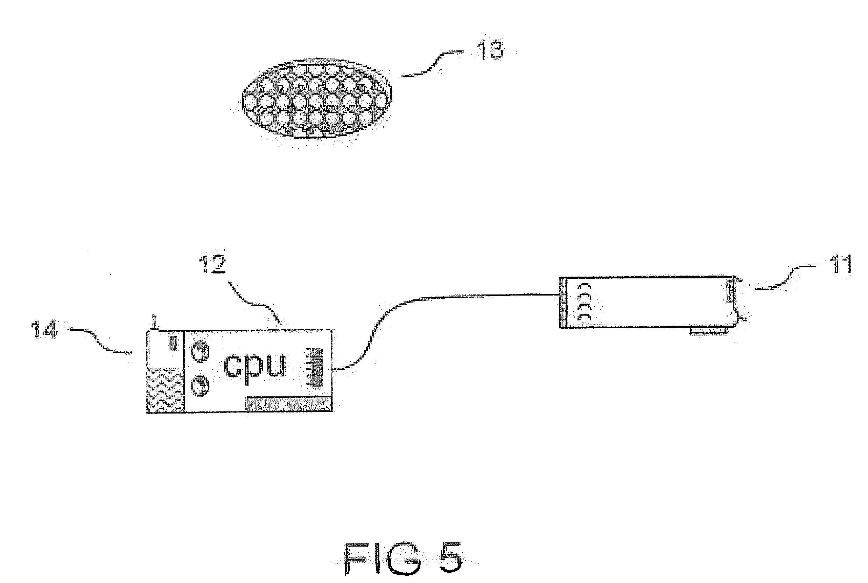

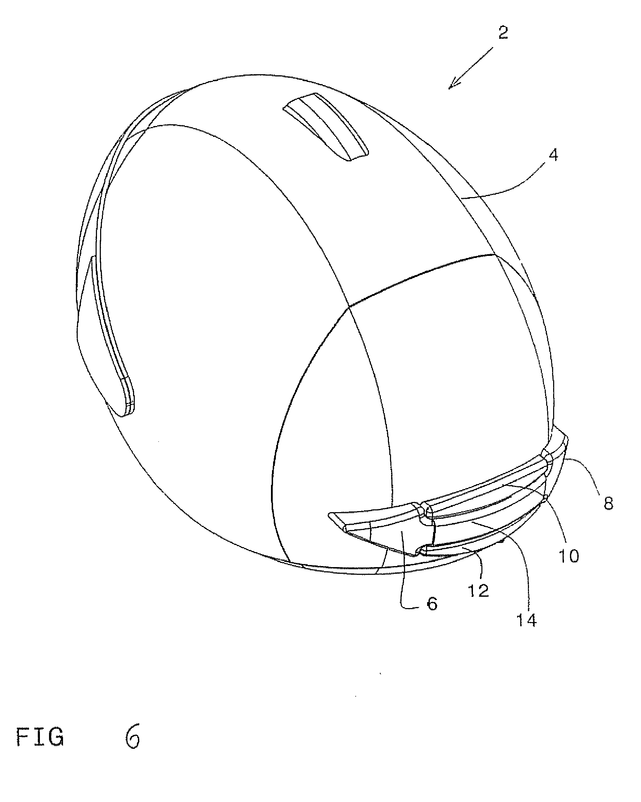

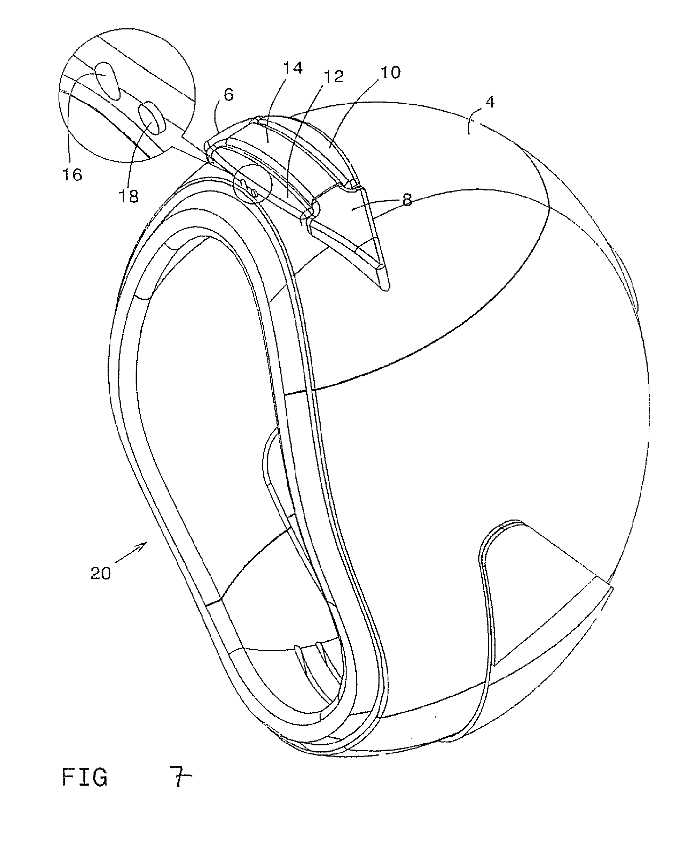

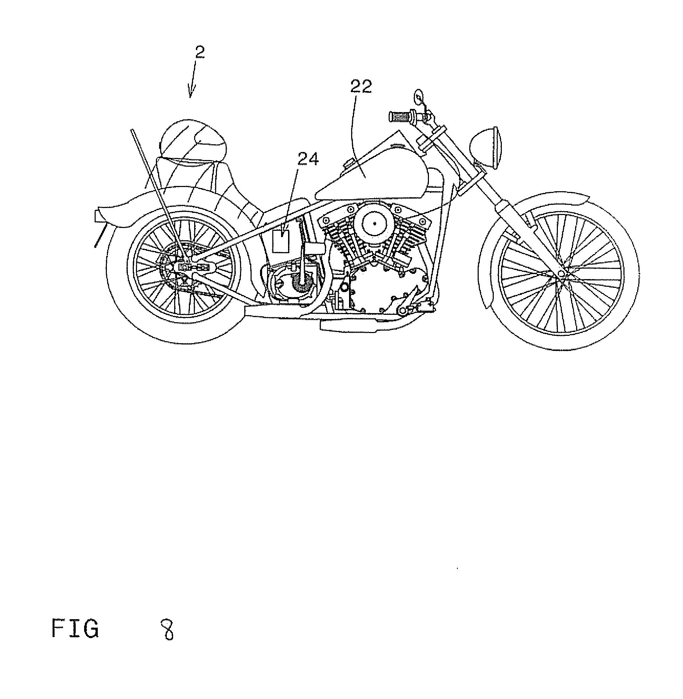

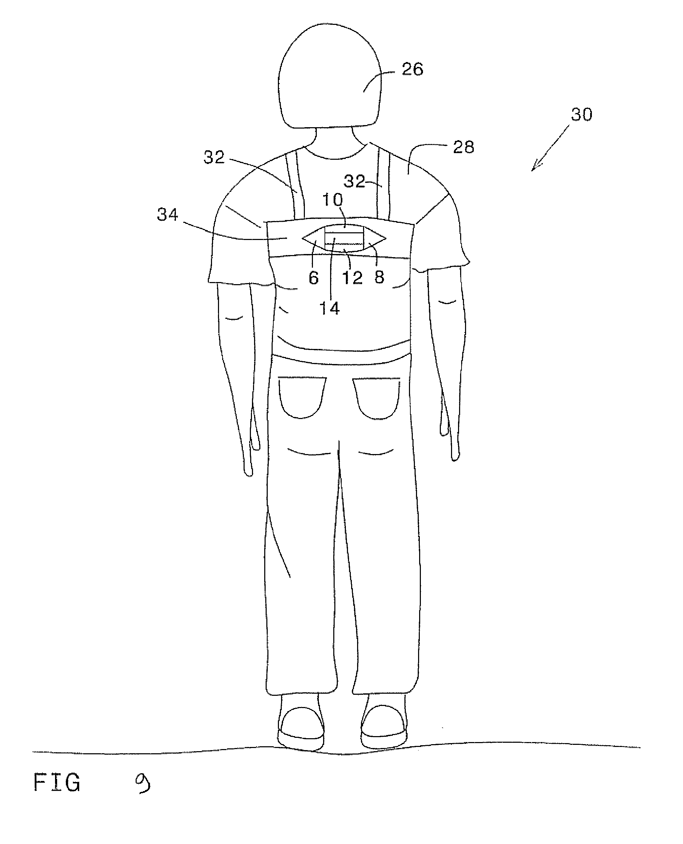

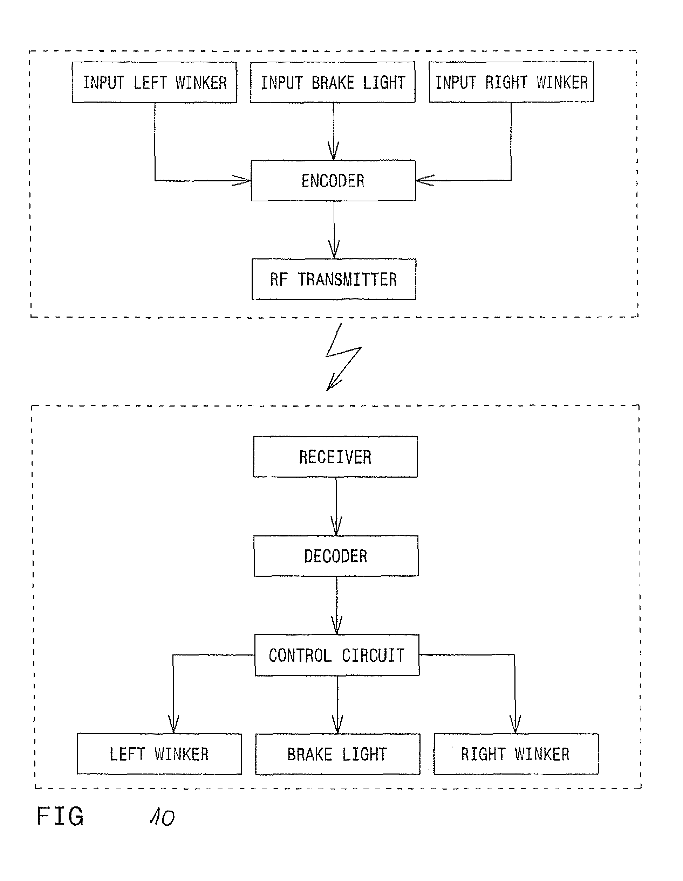

Drawing No. 5 illustrates System No. 3, which includes a device (11) that detects pressure applied to the brake pedal or turning the vinker lights of the motorcycle or motorbike; the control unit (12); the illumination panel (13); and a transmitter (14) that is located near the control unit.

### drawings 6 -

Drawings are hereby added of a motorcycle helmet with turn indicator and brake lights, subject of the invention, which includes the following components: Helmet with turn indicator and brake lights (2); helmet (4); left-hand indicator light (6); right-hand indicator light (8); wireless receiver (10); battery (12); brake light (14); charging socket (16); On/Off pushbutton (18); helmet interior (20); two-wheeled vehicle (22); unit that attaches to vehicle's turn indicator and brake lights and transmits signal to motorcycle helmet (24); regular helmet (26); motorcycle driver (28); additional method whereby indicator and brake lights are illuminated on a belt device (30); shoulder straps to support said belt (32); belt with illumination device for indicator and brake lights (34).

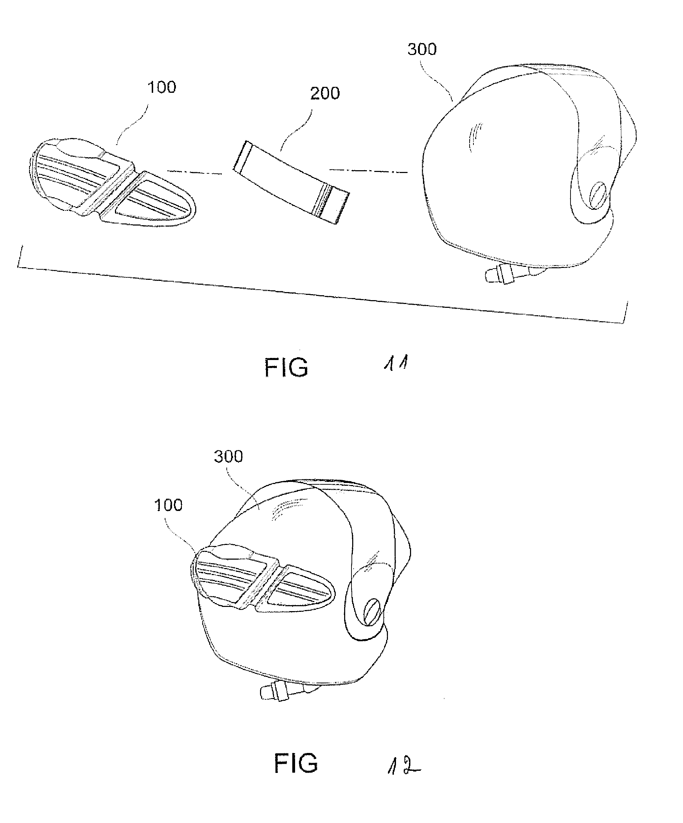

Drawings No. 11 and 12 are hereby attached, depicting a wireless, portable illumination panel (100) that can be affixed to a regular helmet (200) by means of a carrier (300). The carrier is in fact a plate made of metal or plastic or any other rigid material. The carrier (300) can be affixed to the helmet using double-sided sticky tape. Thus, the illumination panel (100) can be affixed to a regular helmet (300) by attaching it to the carrier, with no need for complex and complicated adjustments.

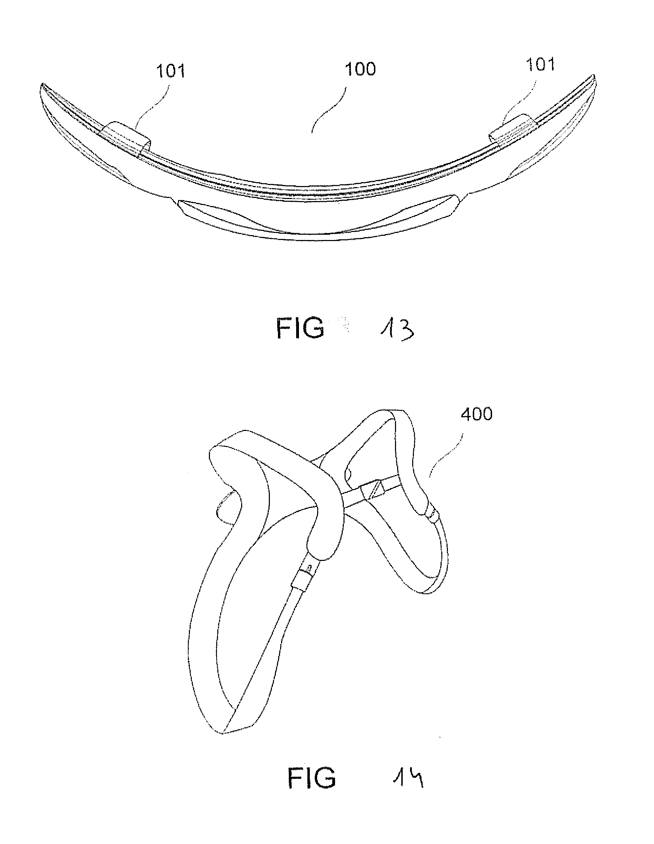

Drawing No. 13 is hereby attached, depicting the illumination panel (100). The upper interior part of the illumination panel includes two clips (101) that enable its attachment to the carrier (200).

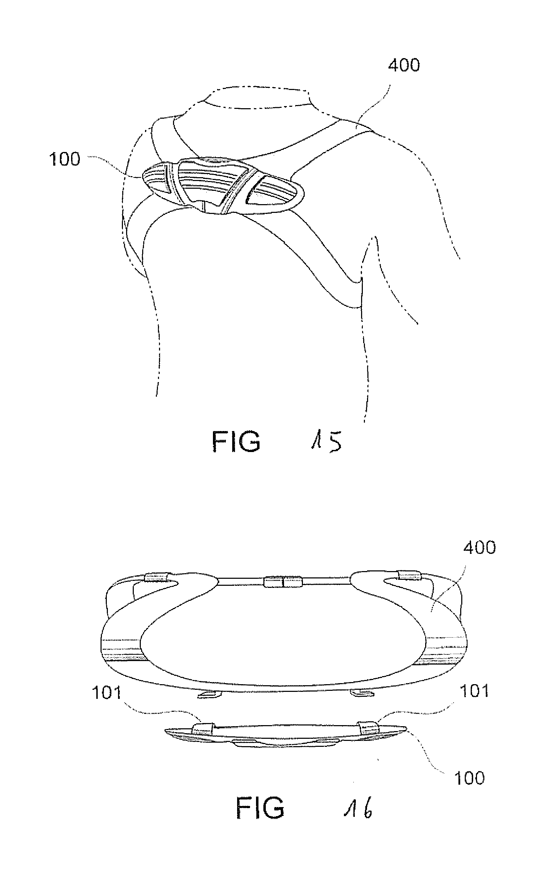

Drawing No. 14 is hereby attached, depicting a harness (400) that the driver (or passenger seated behind) can wear on his or her shoulders as depicted in Drawing No. 15. The illumination panel (100) can be affixed to the harness (400) using the two clips (101), as depicted for instance in Drawings Nos. 15 and 16.

The helmet may include receiver / transmitter correspondent to receiver / transmitter in the Vehicle, which will not work in case the helmet is in a distance greater than 10 meters - this to avoid theft.

## Claims

1. A system designed to issue a warning in case of failure to maintain a safe distance is installed in a motor vehicle and includes one or more sensors or any other device for measuring the distance to the vehicle behind; a device for gauging the speed of the vehicle; a control unit including a processor; and an illumination panel.

2. A system designed to issue a warning in case of failure to maintain a safe distance is installed in a motor vehicle and includes one or more sensors or any other device for measuring the distance to the vehicle ahead; a device for gauging the speed of the vehicle; a control unit including a processor; and an indicator light or acoustic warning device or other warning device.

3. A system designed to issue a warning upon braking or turning on the Vinker lights of a two-wheeled vehicle is installed on the two-wheeled vehicle and includes a device that detects pressure on the motorcycle or motorbikes brake pedal or turning on the vinker lights; a control unit including a processor; an illumination panel that can be attached to the motorcycle or motorbike driver's helmet or clothing.
